# EUROPEAN PATENT APPLICATION

(11) **EP 0 961 241 A2**
(43) Date of publication of application: **01.12.1999**
(21) Application number: 99200969.6
(22) Date of filing: 30.03.1999
(51) Int. Cl.: G07F 7/10

(54) **Multi-memory technology smart card personal banking system**

(30) Priority: 30.03.1998 US 79804 P; 29.03.1999 US 280089
(71) Applicant: Citicorp Development Center, Inc., Los Angeles, California 90066 (US)
(72) Inventor: Kawan, Joseph C., Hollywood CA 90068 (US)
(74) Representative: Hynell, Magnus

(57) **Abstract**

According to the present invention, a system and method for personal banking with a multi-memory technology card is disclosed. A multi-memory technology card belonging to an individual is utilized to encrypt communications regarding the individual's identification, financial, medical and other personal information onto at least one memory of the card. The card has at least a transactional memory or chip memory that stores and runs an encryption application so as to encrypt communications stored in a large capacity memory (e.g., optical memory or thin film semiconductor memory) or within the remaining limited memory of the chip. This encrypted information, when decrypted, informs the reader (e.g., financial institution representative) of, among other things, the identification of the individual as a person having high net worth, thus allowing for increased speed of service at financial institutions that are initially unfamiliar with the individual.

## Description

### RELATED APPLICATIONS

This application claims the benefit of Provisional Application No. 60/079,804, filed March 30, 1998.

### FIELD OF THE INVENTION

The present invention relates to cards for performing monetary transactions generally, and more particularly, to a system and use for personal banking with a smart card, bank card, credit card or the like having multiple technology memory capabilities.

### BACKGROUND OF THE INVENTION

The ability to store and manipulate financial and personal data on a single card is desired by today's consumer. Rather than having this information spread out amongst a number of sources, the consumer would like to be able to store, access and manipulate this information in one place. Also, the consumer desires quick access to information used in daily transactions, such as bank account information, stock information and personal information, as well as information used infrequently, such as medical records and transaction histories.

Further, today's consumer demands convenience in accessing these features. Not only do these features need to be made available with equipment on-site at banks or at remote, on-line terminals, but also anywhere that the cardholder happens to be, such as at home through a personal computer (PC), or through other similar portable personal computing devices. Thus, the consumer demands the functionality of walking into a bank and dealing with a teller, loan officer or manager, within the confines of a plastic card in their wallet.

Additionally, this bank functionality is desired by the high value customer traveling to new locations in order to quickly and easily establish their financial status. Today when high value individuals conduct business away from home or outside of their country, they generally have their bank transfer funds to the business location. The high value individual generally does not have any real cash there, and the banking personnel in the new area are not familiar with the high value individual. In transferring funds, the high value individual may have to wait a day or more for verification, possibly due to time zone differences and person-to-person verification from the new area back to the home area. This waiting period can end up costing the high value individual money, if not an entire business deal, due to the lack of immediate availability of funds. It is very inconvenient for these individuals to have to wait for verification of money that they already possess. Further, current on-line systems may not have balance update information and cannot be used to authorize a large cash advance. Thus, a system utilizing a card for insuring that the credit of high value individuals is more readily recognized, for example, is desired.

The use of magnetic stripe cards is common, however, their utility is confined by their relatively limited memory capability. The magnetic stripe on a typical card comprises 2 tracks where data can be stored and accessed. The standards for determining location and types of data to be stored on the tracks are identified in the International Standards Organization (ISO) standards. Generally, certain industry information must be maintained on one of the tracks, with some open data fields that may be utilized. These open data fields, however, are typically limited to storing only a couple dozen characters. Similarly, very limited information, typically the cardholder's name and account number, may be stored on the other track.

Because of the limited data storage capabilities of magnetic stripe cards, the data on the card is generally not manipulated. Instead, the data is accessed by other systems and used as a pointer to data on those systems that can be manipulated. For example, when a magnetic stripe card is swiped in an Automated Teller Machine (ATM) transaction, the on-line ATM reads the account number information on the card. The ATM then accesses the appropriate account in the on-line system and prompts the user to verify their identity by entering a Personal Identification Number (PIN). The on-line ATM system then checks that the entered PIN matches account PIN that is stored on-line. When there is a match, the ATM allows a transaction to proceed and the on-line account information is adjusted accordingly. Nothing is written onto the magnetic stripe on the card. The stripe is just used for identification purposes so that the on-line system can be accessed. Thus, the data storage capability of magnetic stripe cards limits their usage to transactions linked to on-line systems without updating data on the card itself. Further, conventional cards having magnetic stripe memories do not have internal security mechanisms and are easily duplicated.

In response to these limitations, integrated chip (IC) cards, commonly called smart cards, have been developed. Smart cards are similar to magnetic stripe cards in size and appearance, but instead of having just a magnetic stripe along the back side, they can have an electronic memory, or more specifically, a micro-computer chip embedded within the card. Current industry semiconductor chip technology could give smart cards the ability to store about 1 megabyte of data though typical smart card non-volatile memory size is 16K of electrically erasable programmable read-only memory (EEPROM). Further, the chips have computer functionality and consequently have the ability to store and run programs that can manipulate data.

Yet, with the ever-increasing demands of technology, the storage capability of smart card chips is deemed restrictive. For example, if the cardholder wished to keep a log of their transactions within the chip memory, only about 50 transactions can be stored before reaching the memory limit. Further, only a few programs may be stored in the chip memory. Thus, even though current smart cards offer more storage space and data manipulation capabilities than magnetic stripe cards, they still do not completely satisfy all of the cardholder's needs.

A third type of memory that is currently available in the credit card industry is an optical memory. Optical memories are capable of storing significantly more information, up to 4 Megabytes, than either the magnetic memories or the electronic memories, but do not have the application running abilities of the electronic memories.

Currently, these multiple memory technologies are found on separate cards and require separate read/write components to perform reading and writing from and to the separate memories. Because these memories currently operate in completely separate capacities, they are unable to interact and take advantage of the functionally superior capabilities of one another.

Therefore, it would be advantageous to consolidate the multiple memories and their respective functions so as to allow an individual cardholder to store and manipulate financial and personal data on a single card.

### SUMMARY OF THE INVENTION

According to the present invention, a system and use for personal banking with a multi-memory technology smart card is disclosed. The present invention provides a system for using a card having sufficient memory capability to perform everyday transactions using electronic purses, as well as storing personal information, account information, medical information, etc. The card preferably comprises an optical stripe memory integrated with a smart card integrated circuit (IC) chip memory module. Additionally, the card may include a magnetic stripe for compatibility with current systems. The smart card chip module is used for everyday transactions and storing limited information, while the optical stripe is used for storing large amounts of information. Thus, the system of the present invention allows a customer to rely on the multi-memory technology card for storing and manipulating data and performing transactions.

It is an advantage of the present invention to provide a method of using a multi-technology card belonging to an individual that comprises: inserting the multi-memory technology card into a reader; and decrypting and reading an encrypted communication from one of a first and second memory of the multi-memory card using a key provided by an encryption application of a first memory of the multi-memory card, wherein the encrypted communication is an indicator of the individual's monetary value

It is a further advantage of the present invention to provide a method of using a multi-technology card belonging to an individual that comprises: inserting the multi-memory technology card into a first read/write system; decrypting and reading a first representation of a first encrypted communication used for identifying the individual from a one of a first memory or a second memory of the multi-memory card; obtaining a first replication of the first encrypted communication from the individual via an input device;
comparing the first representation of the first encrypted communication with the first replication of the first encrypted communication to determine a match, wherein, conditional upon a resulting match, the individual is prompted to request a transaction;
performing a transaction of writing a second encrypted communication into one of a first or second memory of the multi-memory card; inserting the multi-technology card into a second read/write system; reading a second representation of the first encrypted communication off of the first or second memory; obtaining a second replication of the first encrypted communication from the individual via an input device; and comparing the second representation of the first encrypted communication with the second replication of the first encrypted communication to determine a match, wherein, conditional upon a resulting match, the second encrypted communication is automatically decrypted and read.

It is a further advantage of the present invention to provide a method of using a multi-technology card belonging to an individual comprising: inserting the multi-memory technology card into a read/write system located in a foreign financial institution; decrypting and reading a representation of an encrypted communication from a memory of the multi-memory card wherein the encrypted communication is at least one of a group consisting of an indicator of the individual's monetary value, an indicator of the individual's investment status, an indicator of the individual's medical condition, an indicator of the individual's loyalty status, and indicator of the individual's public privileges; obtaining a replication of the encrypted communication from the individual via an input device; and comparing the representation of the encrypted communication with the individual's replication of the encrypted communication to determine a match, wherein, conditional upon a resulting match, the individual is prompted to request a transaction.

Additional objects, advantages and novel features of the invention will be set forth in part in the description that follows, and in part will become more apparent to those skilled in the art upon examination of the following or upon learning by practice of the invention.

BRIEF DESCRIPTION OF THE DRAWINGS
FIG. 1 is a front view of the multi-memory technology card of the embodiments of the present invention;
FIG. 2 is a rear view of the multi-memory technology card of the embodiments of the present invention;
FIG. 3 is a block diagram of the multi-memory technology card showing the multiple memories and their functions;
FIG. 4 is a block diagram of an exemplary read/write system used in embodiments of the present invention;
FIG. 5 is a block diagram of the network/terminal configurations used in embodiments of the present invention;
FIG. 6 is a flow chart illustrating a method for reading and writing to a multi-memory technology card described in an embodiment of the present invention; and
FIG. 7 is a flow chart illustrating a method for reading from and writing to a multi-memory technology card described in an embodiment of the present invention.

### DETAILED DESCRIPTION

Reference will now be made to embodiments of the present invention, examples of which are illustrated in the accompanying drawings.

According to the present invention, a system and method for personal banking with a multi-memory technology card is disclosed. A multi-memory technology card belonging to an individual is utilized to encrypt communications regarding the individual's identification, financial, medical and other personal information onto at least one memory of the card. The card has at least a transactional memory or chip memory that stores and runs an encryption application so as to encrypt communications stored in a large capacity memory (e.g., optical memory or thin film semiconductor memory) or within the remaining limited memory of the chip. This encrypted information, when decrypted, informs the reader (e.g., financial institution representative) of, among other things, the identification of the individual as a person having high net worth, thus allowing for increased speed of service at financial institutions that are initially unfamiliar with the individual.

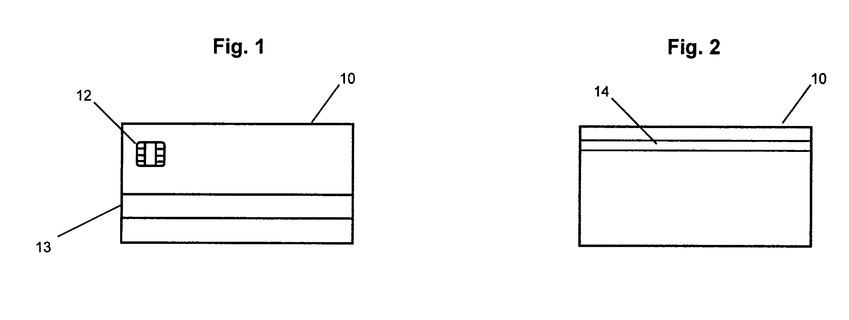

Referring to Figures 1 and 2, a multi-memory technology card 10 has on its front, a large capacity memory 13, such as an optical stripe, which is approximately ¾ of an inch in width and runs across the lower third of the card 10, in accordance with ISO standards. In an alternate embodiment, the optical memory covers one entire side of the multi-memory technology card so as to expand memory capabilities. Figure 1 includes a transactional memory 12, having a capacity less than the large capacity memory 13. Transactional memory 12 includes an electronic memory module or chip memory, which is located according to ISO standards on the front of the card. Further, card 10 may optionally include a conventional magnetic memory 14 including a magnetic stripe on the back of card 10 in conformance with applicable ISO standards. The chip memory 12 is used for everyday transactions and has processing capabilities such that it is able to store and run applications, while storing limited amounts of information. The optical stripe is used for storing large amounts of information.

Thus, the system of the present invention allows an individual to rely on the multi-memory technology card 10 for storing and manipulating data and performing transactions. In an alternate embodiment, the large capacity memory embodied in the optical memory 13, may be provided instead by thin film semi-conductor memory technology, that resides as a laminated layer within the interior of the card. The large capacity memory 13 may be used to keep track of various information. For example, the individual may store: various bank account information, transactional histories and balances; other financial records and accounts, such as stock, bond or mutual fund information; medical records, including information such as compressed x-rays; other business records; and, a personal information database comprising information of the customer's choosing.

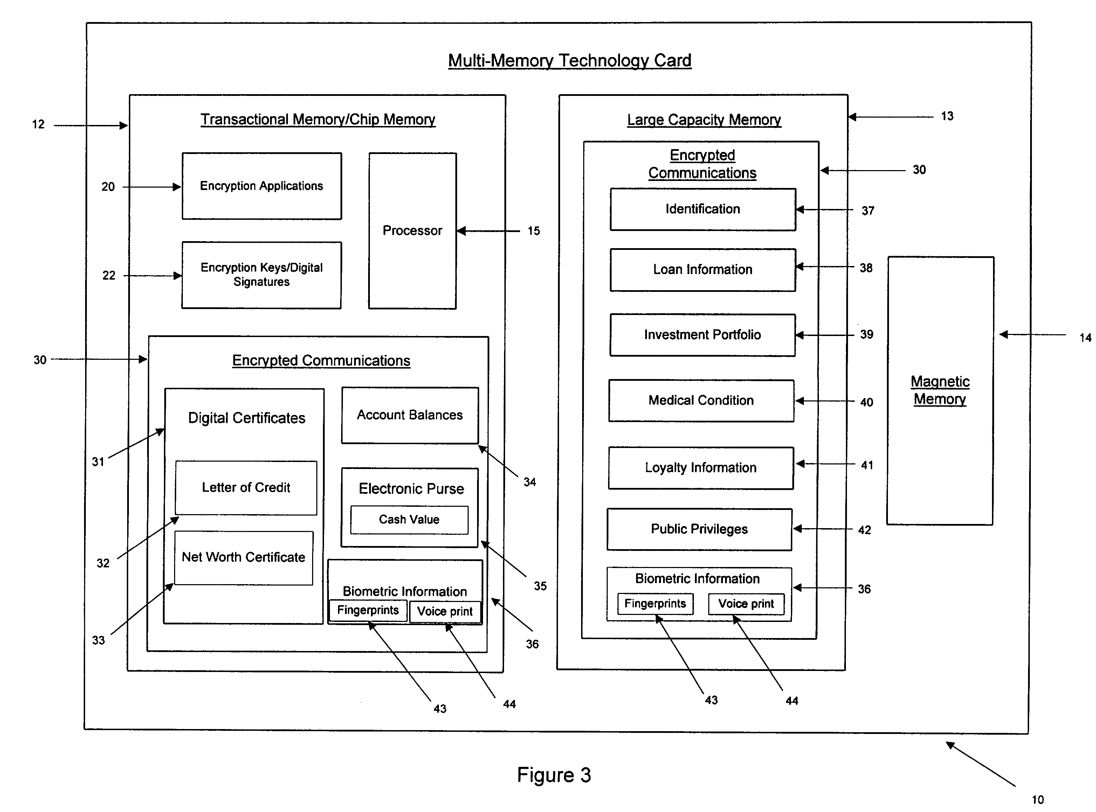

Referring to Figure 3, in an embodiment of the present invention, the security of the information stored in the memories 12 and 13 of the multi-memory technology card 10 is facilitated by an encryption application 20, that is stored on and run by the chip memory 12. For a relevant discussion of cryptography please see "Network and Internetwork Security Principles and Practice," Prentice-Hall, Inc., 1995, which is hereby incorporated by reference. This encryption application 20 is capable of providing and storing encryption keys 22, as they are commonly called (hereafter "keys"), or digital signatures, to any number of communications stored in any memory within the multi-memory technology card 10. The keys 22 are established and controlled in accordance with an encryption algorithm (e.g., Rivest-Shamir-Adleman (RSA) algorithm). Keys 22 may either operate to automatically decrypt the encrypted communications 30 upon insertion of the multi-memory technology card 10 into an appropriate read/write system (discussed below) or there may be an added level of security wherein a code representative of the key 22 must first be entered by the individual before encryption occurs. This code may be represented by some combination of alphanumeric characters, such as a personal identification number (PIN). Additionally, biometric information such as finger prints and voice prints may be required of the individual prior to encrypting and/or decrypting any encrypted communications 30 as well as signature analysis. Similarly, one of the memories of the multi-memory technology card may include visual image data (e.g., an electronic photograph) of the individual, such that visual identification is possible. In further embodiments of the present invention, access to the information and functions in the card 10, require that more than one of these types of codes or types of biometric information be entered by the individual.

The encrypted communications 30 stored in memories 12 and 13 may be: digital certificates 31 such as a letter of credit 32, a net worth certificate 33 or an account hold message; account balances 34; an electronic purse 35 storing cash value; biometric information 36 such as fingerprints 43 and voice prints 44; loan information 38; investment portfolio 39; medical information 40 such as allergy information and compressed x-rays; loyalty information 41 such as frequent flyer information; and public privilege information 42 such as drivers license information, passport information and insurance information.

While the chip memory 12 is relatively limited in its storage capacity compared to the large capacity memory 13, the chip memory is still capable of performing as an electronic purse 35 that can be used to store cash value for use in cash transactions. For example, the chip memory 12 may contain an electronic purse 35 that can be used to make purchases at businesses in the same manner that a credit card or ATM (Automated Teller Machine) card would be used. The use of the internal encryption technology of the chip memory 12, allows for secure transactions using the card 10 at a terminal (described below) that is off-line or on-line including over the Internet. An advantage of the present invention is the ability of the multi-memory technology card to utilize the internal security mechanism found in the encryption application 20 of the chip memory 12 to protect communications in any one or all of the memories of the multi-memory technology card 10.

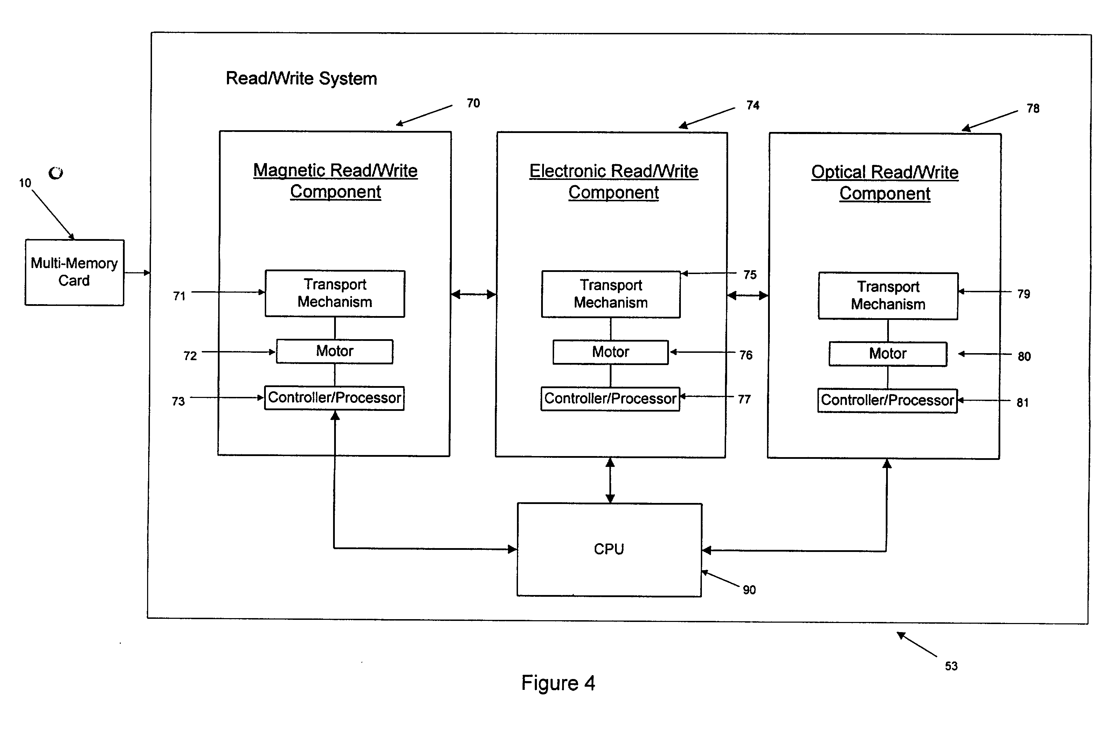

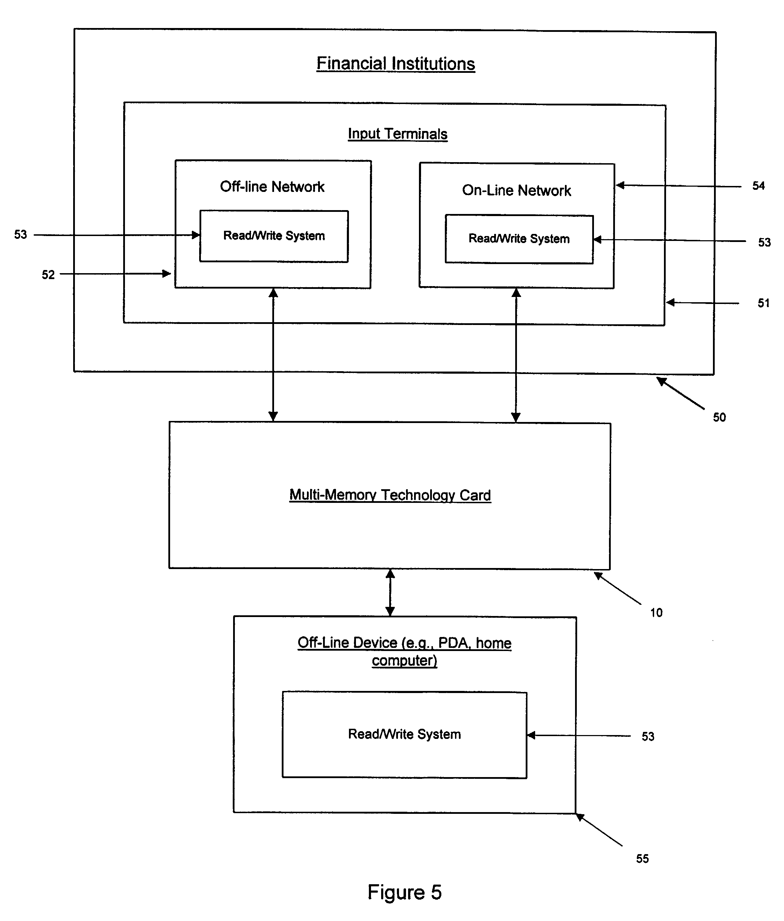

The encrypted communications 30 in the memories may be accessed, manipulated and stored by using any of a variety of input terminals 51 (Figure 5), having a multi-memory read/write system 53 (Figure 5). United States Patent Application No. 09/ , filed March 17, 1999, entitled, "IMPROVED APPARATUS AND SYSTEM FOR OPTICAL CARD READING AND METHOD OF USE," discloses a multiple read/write component system for use with a multi-memory technology card and is hereby incorporated by reference. Referring to Figure 4, an exemplary read/write system 53 disclosed in the above identified application includes a magnetic read/write component 70 attached to the front of an existing electronic read/write component 74, which in turn fits onto the front of an existing, independent optical read/write component 78. In an alternate embodiment, the magnetic read/write component (e.g., the magnetic read/write head (not shown)) may simply be incorporated into a modified electronic read/write component without attaching a third component in its entirety to the front of the electronic read/write component. Further, the magnetic read/write component need not be included in the system at all, leaving only a combined electronic read/write component and optical read/write component system.

The exemplary read/write system 53 further includes a magnetic transport mechanism 71 driven by motor 72 that is controlled by processors 73 and 90. The magnetic transport mechanism 71 initially draws the multi-memory technology card 10 to a first read station (not shown), where a magnetic memory 14 (Figure 2) of the card is mechanically moved relative to the stationary magnetic read/write component 70, so as to obtain identification information about the card user. Next, the magnetic transport mechanism 71 feeds the card 10 to an electronic transport mechanism 75, which transfers the card to an electronic read/write component 74. Depending on the type of chip memory 12 (Figure 1) (e.g., contact or contactless), the electronic read/write head contacts (not shown) of the read/write component 74 are brought down on the modules of the electronic memory on the card, or the electronic transport mechanism positions the card in close enough proximity to the electronic read/write antenna component so as to facilitate data transfer. If after reading and/or writing has been performed, it is determined that additional information exists in the large capacity memory 13 (Figure 1), the electronic transport mechanism 75 may be directed via user command and/or software programming to feed the card to an optical transport mechanism 79, which transfers the card to an optical read/write component 78. The electronic transport mechanism 75 is driven by motor 76 which is controlled by processors 77 and 90, respectively. Similarly, optical transport mechanism 79 is driven by motor 80 which is controlled by processors 81 and 90, respectively.

One skilled in the art will appreciate that there are numerous prior art readers and read/write systems 53 that may be used to read and/or write to the multi-memory technology card 10 in accordance with the embodiments of the present invention.

Referring to Figure 5, the input terminals 50 (e.g., ATMs or CATs) housing the read/write systems 53 may be part of an on-line network 54 or an off-line network 52 at a financial institution 50. Alternatively, the memories may be read or written to by off-line devices 55, such as personal digital assistants (PDA's) or an off-line home computer having incorporated therein, readers and/or read write systems. One skilled in the art will recognize many other similar input terminals 51 that may be used to read and write to the multi-memory technology card 10. The input terminals 51 allow the individual cardholder to look at the encrypted communications 30 (Figure 3) stored in the memories 12 and 13 (Figure 3), for example, to check account balances; add/update new information to the card memories; such as loading a newly established checking account on to the card; and manipulate information in the memories, for example, setting up a personal database to keep track of stock prices.

The present invention may be advantageously used by a high net worth individual to establish their financial status throughout the world. An encrypted communication 30 may be entered into the memory of the card 10 that identifies the cardholder as a high net worth individual upon insertion of the card into a read/write system 53. The encrypted communication 30 indicating high net worth may be as simple as a universally accepted sign for high net worth such as "$$$" or some other established sign. Additionally, or in lieu thereof, the encrypted communication 30 indicating high net worth includes an electronic purse 35, showing available cash value, a letter of credit 32 certifying available credit value, or an account hold message. An encrypted communication 30 indicating an account hold allows a foreign financial institution to see that a cash advance requested by an individual is secured by a hold on his accounts at his home financial institution. This enables the foreign financial institution to confidently advance the requested cash with the knowledge that the funds will be available and they will be reimbursed for the advance and any fees. Further, it may be advantageous to have encrypted communications 30 indicating the identity of an individual attempting to use a multi-memory technology card 10, prior to reaching the encrypted communications 30 indicating high net worth.

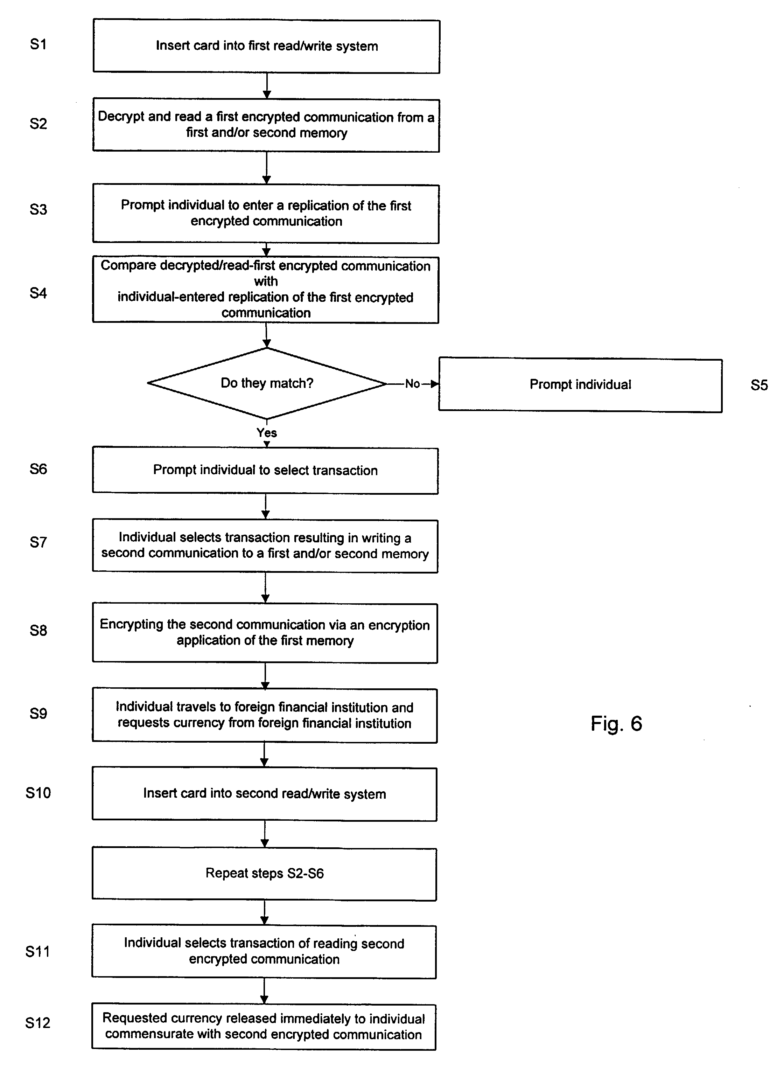

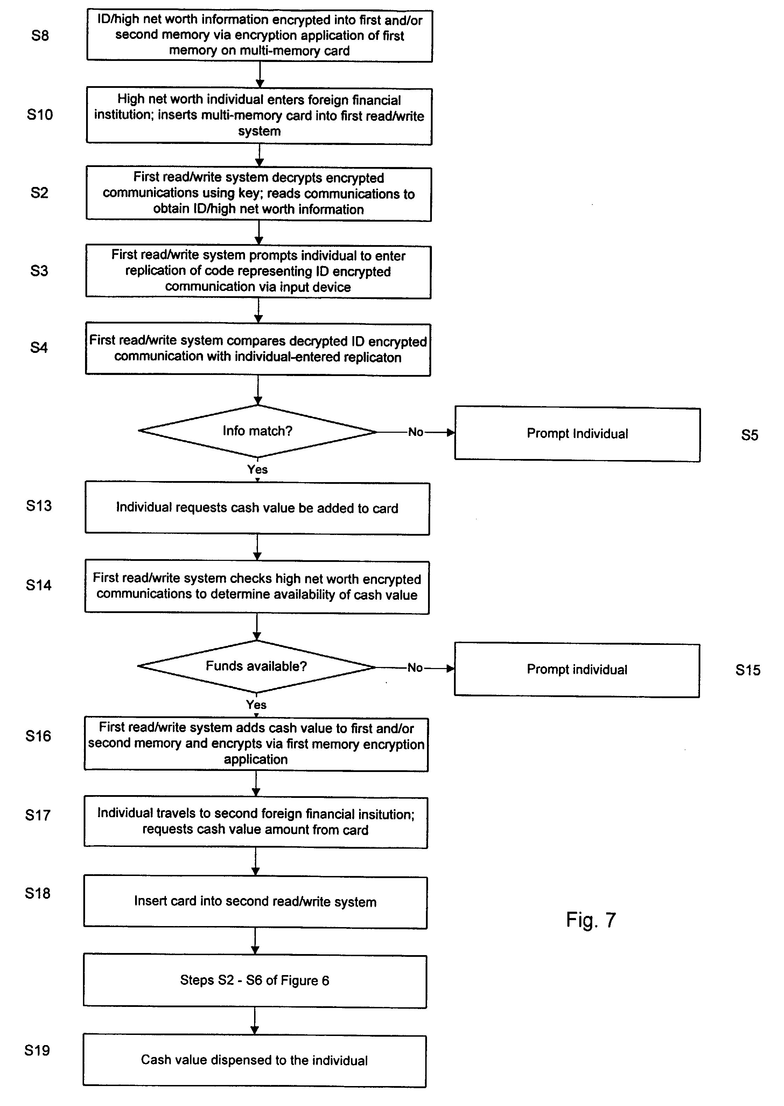

In an embodiment of the present invention a high value individual is able to securely carry an easily accessible, high credit or cash value on the multi-memory technology card. Referring to Figure 6, in a first working example of this embodiment, a high value individual enters his home financial institution with his previously issued multi-memory technology card. The individual presents his card to an appropriate financial institution representative with a request that a high cash value be added to his card and/or that an indicator of his high value available credit be added to his card. The financial institution representative inserts the card into an appropriate computer controlled read/write system, S1, that automatically decrypts and reads encrypted communications relaying identification information off of an appropriate memory of the card, S2. In an alternative embodiment, the reader automatically decrypts and reads encrypted communications relaying high net worth information, in lieu of, or in addition to the encrypted communications relaying identification information. The individual is prompted to enter either an alphanumeric code that is representative of the decrypted identification information via an input device such as a keyboard or to enter biometric identification information via a finger print or voice reader, S3. The information provided by the individual is compared to the decrypted identification information by the computer, S4. If there is a match, the individual gains access to the contents of the card and may perform any number of transactions, S6. If no match is found, the individual is prompted accordingly and either the individual is asked to re-enter the required identifying information or the card is ejected from the read/write component, S5.

Assuming a match is found, and the individual gains access, the individual requests that an indicator of his high value available credit and/or that a high cash value be written to his card, S7. An indicator of high value available credit includes, for example, an encrypted digital certificate such as a letter of credit or account hold message, that when decrypted, certifies to the reader that the individual actually has the available credit that he is requesting. Similarly, an actual high amount of cash may be encrypted onto the card, in for example, the card's electronic purse, wherein, decryption verifies the available balance. The digital certifications of high value credit or cash are, preferably, loaded into the optical or thin-film semiconductor memory and secured with a key or digital signature or some other encryption capability of the chip memory, S8.

The individual carries this card, having encrypted thereon one or both of his high value credit by certification and his high cash value, to, for example, a different country. The individual wishes to avail himself of a substantial portion of his available credit and/or cash value. He enters a first foreign financial institution, presenting his communication encrypted multi-memory technology card to an appropriate financial institution representative, with a request for X amount of currency, S9. The financial institution representative inserts the card into an appropriate computer controlled read/write system, S10, and the identification steps, S2-S6, are performed. Assuming a match, the individual requests that the encrypted communications relating to his high net worth be read, S11, and that X amount of currency be released to him without delay, S12.

Without the advantage of this invention, the first foreign financial institution would not be able to certify or verify the high values of credit and/or cash available to the individual without contacting the individual's home financial institution and waiting for letters of credit and/or bank-to-bank verifications. This process takes hours, if not days, to complete. With the present invention, while this standard method of transferring funds between the individual's home financial institution and the first foreign financial institution is eventually carried out, the individual need not wait for them to be completed because the available credit and/or funds are verified immediately by decrypting the identification and high net worth encrypted communications. In other words, the present invention allows the individual to store an encrypted letter of credit. The letter of credit, secured by encryption, serves to verify and authorize the loaded value, cash or credit, on the card. This enables the individual to quickly and easily access their funds at any location, through any participating financial institution. The encrypted letter may be specific to only one bank, or it may be in a universally accepted format so that it may be accepted by all financial institutions.

In a further embodiment of the present invention, referring to Figure 7, instead of requesting that cash value actually be dispensed to the individual by the first foreign financial institution, the individual requests that the cash value be added to his card based on the decrypted communication regarding available credit value, S13. The first foreign financial institution decrypts the encrypted communication containing the certification as to available credit, S14, and adds the requested amount in the form of cash value, encrypting the cash amount via the chip memory's encryption application, S16 into the chip memory's electronic purse. If the requested sum is not available to the individual, he is prompted to that effect, S15.

Subsequently, the individual travels to a second foreign financial institution located in a second foreign country, and requests that the currency available on his multi-memory technology card be dispensed to him, S17. A financial institution representative in the second foreign financial institution, inserts the card into a read/write system and performs the identification steps of Figure 6, S2-S6, prior to reading the cash value off of the multi-memory technology card, S18. Finally, the financial institution representative dispenses the requested and available currency to the individual, S19.

The embodiments and examples presented above are merely representative of the functions and applications that are within the purview of the present invention. One skilled in the art can appreciate the many variations that are implicit in the present invention.

## Claims

1. A method of using a multi-memory technology card belonging to an individual comprising:
inserting the multi-memory technology card into a reader; and
decrypting and reading an encrypted communication from one of a first and second memory of the multi-memory card using a key provided by an encryption application of a first memory of the multi-memory card, wherein the encrypted communication is an indicator of the individual's monetary value.

2. The method according to claim 1, wherein the first memory is an electronic memory having processing capabilities.

3. The method according to claim 1, wherein the second memory is at least one of the group consisting of an optical memory and a thin-film semiconductor memory.

4. The method according to claim 1, wherein the indicator of the individual's monetary value is at least one of the group consisting of a letter of credit, a certification of net worth, an account hold message, bank account balances, loan information, and an electronic purse.

5. A method of using a multi-memory technology card belonging to an individual comprising:
inserting the multi-memory technology card into a first read/write system;
decrypting and reading a first representation of a first encrypted communication used for identifying the individual from one of a first memory or a second memory of the multi-memory card;
obtaining a first replication of the first encrypted communication from the individual via an input device;
comparing the first representation of the first encrypted communication with the first replication of the first encrypted communication to determine a match wherein, conditional upon a resulting match, the individual is prompted to request a transaction;
performing a transaction of writing a second encrypted communication into one of a first or second memory of the multi-memory card;
inserting the multi-technology card into a second read/write system;
reading a second representation of the first encrypted communication off of the first or second memory;
obtaining a second replication of the first encrypted communication from the individual via an input device; and
comparing the second representation of the first encrypted communication with the second replication of the first encrypted communication to determine a match wherein, conditional upon a resulting match, the second encrypted communication is automatically decrypted and read.

6. The method according to claim 5, wherein the first encrypted communication comprises at least one of the group consisting of the image of the individual, the signature of the individual, the finger print of the individual, the voice sample of the individual and, a personal identification code.

7. The method according to claim 5, wherein the second encrypted communication comprises at least one of an indicator of the individual's monetary value, an indicator of the individual's investment status, an indicator of the individual's medical condition, an indicator of the individual's loyalty status, and indicator of the individual's public privileges.

8. The method according to claim 7, wherein the indicator of the individual's monetary value is at least one of the group consisting of a letter of credit, a certification of net worth, an account hold message, bank account balances, loan information, and cash.

9. The method according to claim 7, wherein the indicator of the individual's investment status is an investment portfolio.

10. The method according to claim 7, wherein the indicator of the individual's public privileges is at least one of the group consisting of driver's license, passport, and insurance information.

11. The method according to claim 7, wherein the indicator of the individual's medical condition is at least one of the group consisting of allergy information, medical history, and compressed x-rays.

12. The method according to claim 5, wherein the first read/write system is located in a first financial institution in a first country and the second read/write system is located in a second financial institution in a second country.

13. The method according to claim 5, further comprising:
requesting currency from the second financial institution located in a second country;
dispensing the requested currency in an amount equal to or less than the amount relayed by the second encrypted communication.

14. The method according to claim 5, wherein the first memory is an electronic memory comprising a microprocessor for storing and running applications.

15. The method according to claim 5, wherein the second memory is selected from the group consisting of an optical memory and a thin film semiconductor memory.

16. The method according to claim 15, wherein the second memory is a thin film semiconductor memory.

17. The method according to claim 5, wherein the input device is selected from the group consisting of a touchscreen, a keyboard, a microphone, and a fingerprint reading device.

18. The method according to claim 5, wherein the first representation, the second representation, the first replication and the second replication are a sequence of alphanumeric characters that control an encryption algorithm.

19. A method of using a multi-technology card belonging to an individual comprising:
inserting the multi-memory technology card into a read/write system located in a foreign financial institution;
decrypting and reading a representation of an encrypted communication from a memory of the multi-memory card wherein the encrypted communication is at least one of a group consisting of an indicator of the individual's monetary value, an indicator of the individual's investment status, an indicator of the individual's medical condition, an indicator of the individual's loyalty status, and indicator of the individual's public privileges;
obtaining a replication of the encrypted communication from the individual via an input device; and
comparing the representation of the encrypted communication with the individual's replication of the encrypted communication to determine a match, wherein, conditional upon a resulting match, the individual is prompted to request a transaction.

20. The method according to claim 19, further comprising:
selecting a transaction of requesting an amount of currency from the foreign financial institution; and
dispensing the amount of requested currency, without substantial delay, based on the indicator of the individual's monetary value.

21. The method according to claim 19, wherein the indicator of the individual's monetary value is at least one of the group consisting of a letter of credit, a certification of net worth, an account hold message, bank account balances, loan information, and cash value.

22. The method according to claim 19, wherein the indicator of the individual's investment status is an investment portfolio.

23. The method according to claim 19, wherein the indicator of the individual's public privileges is at least one of the group consisting of a driver's license, a passport, and insurance information.

24. The method according to claim 19, wherein the indicator of the individual's medical condition is at least one of the group consisting of allergy information, medical history, and compressed x-rays.

25. The method according to claim 19, wherein the representation and the replication are a sequence of alphanumeric characters that control an encryption algorithm.

26. The method according to claim 19, wherein the foreign financial institution is selected from the group consisting of a financial institution located in a country other than where the individual's home financial institution is located wherein, the foreign financial institution and the home foreign institution are networked; a financial institution located in a country other than where the individual's home financial institution is located wherein, the foreign financial institution and the home foreign institution are not networked; a financial institution located in the same country as the individual's home financial institution wherein, the foreign financial institution and the home foreign institution are not networked; and a financial institution located in the same country as the individual's home financial institution wherein, the foreign financial institution and the home foreign institution are networked.

27. A system for using a multi-memory technology card belonging to an individual comprising:
means for inserting the multi-memory technology card into a first read/write system;
means for decrypting and reading a first representation of a first encrypted communication used for identifying the individual off of one of a first or second memory;
means for obtaining a first replication of the first encrypted communication from the individual;
means for comparing the first representation of the first encrypted communication with the first replication of the first encrypted communication to determine a match, wherein, conditional upon a resulting match, the individual is prompted to request a transaction;
means for performing a transaction of writing a second encrypted communication into one of a first or second memory of the multi-memory card;
means for inserting the multi-technology card into a second read/write system;
means for reading a second representation of the first encrypted communication off of the first or second memory;
means for obtaining a second replication of the first encrypted communication from the individual; and
means for comparing the second representation of the first encrypted communication with the second replication of the first encrypted communication to determine a match, wherein, conditional upon a resulting match, the second encrypted communication is automatically decrypted and read.
